# EUROPÄISCHE PATENTSCHRIFT

(11) **EP 2 622 962 B1**
(45) Veröffentlichungstag und Bekanntmachung des Hinweises auf die Patenterteilung: **17.12.2014**
(21) Anmeldenummer: 12153328.5
(22) Anmeldetag: 31.01.2012
(51) Int. Cl.: A22C 21/00

(54) **Sehnen-Trennvorrichtung sowie Bearbeitungsvorrichtung mit einer solchen Sehnen-Trennvorrichtung und Verfahren zum automatischen Abtrennen von an Innenbrustfilets befindlichen Sehnen und/oder Sehnenabschnitten**
Tendon separation apparatus and processing apparatus with such a tendon separation apparatus and method for automatic separation of tendons and/or tendon sections on inner breast filets
Dispositif de séparation de tendons ainsi que dispositif de traitement doté d'un tel dispositif de séparation de tendons et procédé de séparation automatique de tendons et/ou sections de tendons se trouvant sur des filets intérieure

(43) Veröffentlichungstag der Anmeldung: 07.08.2013
(73) Patentinhaber: Nordischer Maschinenbau Rud. Baader GmbH + Co. KG, 23560 Lübeck (DE)
(72) Erfinder: Landt, Andreas, 23554 Lübeck (DE)
(74) Vertreter: Stork Bamberger

(56) Entgegenhaltungen:
- EP-A1- 1 070 456
- US-A- 4 873 746
- US-A- 5 314 374

## Beschreibung

Die Erfindung betrifft eine Sehnen-Trennvorrichtung zum automatischen Abtrennen von an Innenbrustfilets befindlichen Sehnen und/oder Sehnenabschnitten bei entweideten und vollständig von Flügeln befreiten Geflügelkörpern, bei denen sowohl das direkt an der Karkasse liegende Innenbrustfilet als auch das das Innenbrustfilet abdeckende Außenbrustfilet in ihrer natürlichen Position liegen, und die mit den Schultergelenken voraus in Transportrichtung T entlang einer die Transportebene E definierende Transportstrecke transportiert werden, wobei das nach unten weisende Brustbein in Längsrichtung der Transportrichtung T und parallel zu dieser ausgerichtet ist, umfassend ein Paar Trennmittel zum Trennen der Sehnen und/oder Sehnenabschnitte vom Innenbrustfilet, wobei die beiden Trennmittel auf einander gegenüberliegenden Seiten der Transportstrecke der zu bearbeitenden Geflügelkörper liegen.

Die Erfindung betrifft auch eine Bearbeitungsvorrichtung zum Entfernen des Fleisches von entweideten und vollständig von Flügeln befreiten Geflügelkörpern, umfassend in einer Bearbeitungslinie angeordnete Bearbeitungsstationen, einen angetriebenen Förderer mit längs der Bearbeitungslinie in Reihe angeordneten Haltevorrichtungen zum Transport von auf den Haltevorrichtungen gestützten Geflügelkörpern und Vorbeiführen derselben an den Bearbeitungsstationen, wenigstens eine Messsignale abgebende Messvorrichtung zum Erfassen individueller Merkmale der Geflügelkörper während ihrer Förderung sowie eine die Messsignale empfangende Steuereinrichtung zum Steuern des Betriebs der Bearbeitungsstationen, sowie eine Sehnen-Trennvorrichtung als Bearbeitungsstation zum automatischen Abtrennen von an Innenbrustfilets befindlichen Sehnen und/oder Sehnenabschnitten.

Des Weiteren betrifft die Erfindung ein Verfahren zum automatischen Abtrennen von an Innenbrustfilets befindlichen Sehnen und/oder Sehnenabschnitten bei entweideten und vollständig von Flügeln befreiten Geflügelkörpern, bei denen sowohl das direkt an der Karkasse liegende Innenbrustfilet als auch das das Innenbrustfilet abdeckende Außenbrustfilet in ihrer natürlichen Position liegen.

Solche Vorrichtungen bzw. Bearbeitungsvorrichtungen und Verfahren kommen üblicherweise in der Be- und Verarbeitung von Tierkörpern zum Einsatz. Die eingangs genannte Vorrichtung ist üblicherweise Bestandteil einer Bearbeitungsvorrichtung zur Bearbeitung von geschlachteten Geflügelkörpern, wobei unter Tierkörpern auch Tierkörperteile verstanden werden. Die Bearbeitungsvorrichtung ist insbesondere zur Be- und Verarbeitung von Geflügel (z.B. Huhn, Pute etc.), nämlich zum Filetieren von Brustkappen oder Vorderhälften eingerichtet. Die Bearbeitungsvorrichtung, insbesondere zum Entfernen des Fleisches von entweideten und vollständig von Flügeln befreiten Geflügelkörpern, umfasst mehrere in einer Bearbeitungslinie angeordnete Bearbeitungsstationen und -werkzeuge sowie einen angetriebenen, umlaufenden Förderer mit daran längs der Bearbeitungslinie in Reihe angeordneten Haltevorrichtungen. Mittels dieser Haltevorrichtungen, die auch als Transportsattel bezeichnet werden, erfolgt der Transport der Tierkörper durch die Bearbeitungsvorrichtung und das Vorbeiführen derselben an den Bearbeitungsstationen und - werkzeugen. Um die Bearbeitungsstationen und - werkzeuge überhaupt steuern zu können, umfasst eine Bearbeitungsvorrichtung zumindest die Messsignale abgebende Messvorrichtung zum Erfassen individueller Merkmale der Geflügelkörper. Dabei haben sich die Schultergelenke als besonders geeignete Messpunkte herausgestellt. Die aus den Messungen erhaltenen Informationen/Daten zum Geflügelkörper werden dann von der Steuereinrichtung zum Steuern des Betriebs der Bearbeitungsstationen verwendet. Dies gilt insbesondere auch für die Steuerung der Sehnen-Trennvorrichtung als Bestandteil einer Bearbeitungsvorrichtung.

An dieser Stelle sind zum besseren Verständnis der Erfindung zunächst die relevanten Bereiche der Karkasse eines Geflügelkörpers am Beispiel eines Huhns kurz zu beschreiben. Die Karkasse umfasst im Bereich der Vorderhälfte u.a. das Brustbein. Die beiden Rabenbeine (auch Rabenschnabelbeine genannt) verbinden den kranialen Rand des Brustbeins mit den Schultergelenken. Im Schultergelenk laufen jeweils Rabenbein (Os coracoideum), Schulterblatt (Scapula) und Schlüsselbein (Clavicula) zusammen. Die Schulterblätter sind mit ihrem kranialen Ende fest mit dem entsprechenden Rabenbein verbunden. Die beiden Schlüsselbeine bilden das Gabelbein (Furcula). Die im Schultergelenk zusammenlaufenden Knochen bilden jeweils einen Kanal (canalis triosseum). Die Innenbrustfilets liegen direkt an der Karkasse, nämlich quasi in einer durch Rabenbein und Schlüsselbein gebildeten bzw. von Rabenbein und Schlüsselbein umrandeten Senke bzw. Kehle. Die Innenbrustfilets weisen jeweils eine Sehne auf, die sich ausgehend vom Innenbrustfilet von innen durch den im Schultergelenk gebildeten Kanal nach außen zum Flügel erstreckt. Das Außenbrustfilet liegt über dem Innenbrustfilet und deckt dieses vollständig ab.

Als weitere Bearbeitungsstationen bzw. -werkzeuge weist eine Bearbeitungsvorrichtung oder -linie üblicherweise wenigstens solche auf, mittels der die Brustfilets (Hauptbrustfilet mit oder ohne Innenbrustfilet) durch Schneiden und/oder Schaben vollständig von der Karkasse gelöst werden. Üblicherweise werden die auf dem Transportsattel aufgesattelten Tierkörper zumindest im Bereich der Vorrichtungen zum Trennen der Brustfilets über Kopf transportiert, derart, dass das Brustbein nach unten weist. Der Transport der Tierkörper erfolgt im Bereich der genannten Vorrichtungen mit dem Gabelbein der Karkasse voraus. Das bedeutet, dass die Karkasse mit den Schultergelenken voraus in Transportrichtung transportiert wird. Wenn der Geflügelkörper diese Bearbeitungsstation erreicht, ist dieser vollständig entweidet und frei von Flügeln. Mit anderen Worten wurden in vorgeschalteten Prozessschritten die Flügel vollständig abgetrennt, derart, dass die Flügel im Schultergelenk abgetrennt wurden, wodurch die Schultergelenke frei liegen. Dadurch sind auch die Sehnen, die u.a. das Innenbrustfilet mit dem Flügel verbinden, getrennt, so dass sich am Innenbrustfilet Sehnen bzw. Sehnenabschnitte befinden, die mit ihrem freien Ende noch von innen nach außen durch den im Schultergelenk gebildeten Kanal ragen. Sowohl das Innenbrustfilet als auch das Außenbrustfilet liegen aber noch in ihrer ursprünglichen und natürlichen Position.

Entfernt man mittels der genannten Bearbeitungsstation nun maschinell durch Schaben und/oder Schneiden die Außenbrustfilets und die Innenbrustfilets von der Karkasse, gewinnt man neben den Außenbrustfilets auch Innenbrustfilets, an denen sich jeweils eine Sehne bzw. ein Sehnenabschnitt befindet. In der Praxis ist es üblich, die bei dem Filetieren von Geflügelkörpern anfallenden Innenbrustfilets nachzubearbeiten, um den sehnigen Bereich am Innenbrustfilet zu entfernen. Man spricht in diesem Zusammenhang auch vom "Clippen". Dieses "Clippen" erfolgt bisher manuell.

Die EP 1 070 456 B1 beschreibt eine Vorrichtung und ein Verfahren zur Gewinnung des inneren Filets, also des Innenbrustfilets. Die bekannte Vorrichtung sieht vor, dass die Sehnen mittels Kreismessern von den Innenbrustfilets abgetrennt werden. Dazu ist es erforderlich, die inneren Filets zumindest soweit frei zu legen, dass der Bereich, in dem die Sehne an dem Innenbrustfilets ansetzt, für die Kreismesser frei zugänglich ist. Das bedeutet, dass das äußere Brustfilet mindestens teilweise entfernt werden muss. Für den Fall, dass die Geflügelkörper mit ihrem Brustbein senkrecht zur Förderrichtung transportiert werden, werden die Innenbrustfilets, nachdem die Außenbrustfilets mindestens teilsweise zurückgezogen wurden, mittels einer Führung in Position gedrückt, damit die Kreismesser den Bereich des Sehnenansatzes am Innenbrustfilet erreichen können. Für den Fall, dass die Geflügelkörper mit ihrem Brustbein im Wesentlichen parallel zur Förderrichtung transportiert werden, werden die Innenbrustfilets zunächst durch ein Werkzeug angehoben, damit die Kreismesser den Bereich des Sehnenansatzes am Innenbrustfilet erreichen können.

Diese Vorrichtung sowie das entsprechende Verfahren weisen somit den Nachteil auf, dass die Innenbrustfilets zunächst freigelegt werden müssen, um überhaupt den Sehnenschnitt ansetzen zu können. Das kann bereits zu Beschädigungen des Außenbrustfilets und/oder des Innenbrustfilets führen. Im Übrigen ist der Einsatz von Kreismessern zum Abtrennen der Sehnen bzw. des Sehnenabschnitts ohnehin problematisch, da der Bereich des Sehnenansatzes am Innenbrustfilet, den es abzutrennen gilt, in einer Kehle zwischen dem Rabenbein und dem Schlüsselbein liegt. Dieser Bereich ist für die Kreismesser schwer zugänglich, ohne die Knochen zu beschädigen. Um das zu verhindern, sind entsprechend weitere Vorbereitungsschritte mit zusätzlichen Werkzeugen notwendig, was einerseits den Aufwand der Vorrichtung erhöht und zum anderen auch zu weiteren Gefahren bezüglich der Beschädigung von Außenbrustfilet und/oder Innenbrustfilet sowie der Karkasse führt.

Der Erfindung liegt demnach die Aufgabe zugrunde, eine einfache und zuverlässige Vorrichtung zu schaffen, mittels der die Sehnen bzw. Sehnenabschnitte schnell und sicher vom Innenbrustfilet getrennt werden können. Der Erfindung liegt weiterhin die Aufgabe zugrunde, ein entsprechendes Verfahren vorzuschlagen.

Diese Aufgabe wird durch eine Vorrichtung mit den eingangs genannten Merkmalen dadurch gelöst, dass die Trennmittel als Stechmesser ausgebildet sind, wobei jedes Stechmesser zur Ausübung mindestens zweier Schnittbewegungen unterschiedlicher Bewegungsrichtungen ausgebildet und eingerichtet ist und die beiden Schnittbewegungen überlagerbar sind. Mit der erfindungsgemäßen Lösung kann der Sehnenabschnitt bzw. der am Innenbrustfilet angeordneten Sehnenansatz, der bei den vorangegangenen Prozessschritten am Innenbrustfilet verblieben ist, sicher und zuverlässig abgetrennt werden. Durch die Erfindung ist es erstmals möglich, bei einem Geflügelkörper, bei dem die Innenbrustfilets und die Außenbrustfilets in ihrer natürlichen Position liegen, die Sehnenansätze am Innenbrustfilet zu kappen. Anders ausgedrückt ist das Abtrennen des sehnigen Bereiches am Innenbrustfilet, der den Ursprung der Sehne bildet, ohne Präparation bzw. vorbereitenden Schritte am Innenbrustfilet und Außenbrustfilet automatisch möglich. Die beiden realisierten Schnittbewegungen ermöglichen einerseits das Einstechen des Stechmessers in den Geflügelkörper, und zwar unterhalb der zu trennenden Sehne, sowie das Herausziehen des Stechmessers und andererseits das Ausführen des Trennschnittes, indem beim Herausziehen des Stechmessers eine zweite Schnittbewegung überlagert wird, die zu einem ziehenden Schnitt vom Rabenbein in Richtung Schlüsselbein führt, der die Sehne bzw. den Sehnenabschnitt zuverlässig vom Innenbrustfilet abtrennt. Anders ausgedrückt wird durch die Überlagerung der Ziehbewegung des Stechmessers nach außen als erste Schnittbewegung und die Kippbewegung des Stechmessers nach unten als zweite Schnittbewegung ein ziehender Schnitt erreicht, mit dem die Sehne bzw. der Sehnenabschnitt zuverlässig vom Innenbrustfilet abgetrennt wird.

Eine zweckmäßige Weiterbildung der Erfindung zeichnet sich dadurch aus, dass jedes Stechmesser an einem um eine Rotationsachse K schwenkbaren Trägerelement angeordnet ist, das wiederum an einem um eine Rotationsachse Z schwenkbaren Schwenkhebel befestigt ist. Mit dieser konstruktiv einfachen Lösung sind die überlagerten Schnittbewegungen besonders einfach überlagerbar und schnell ausführbar.

Vorteilhafterweise ist die Rotationsachse Z parallel zur Transportebene E und in Richtung der Transportrichtung T ausgerichtet, derart, dass das Stechmesser quer zur Transportrichtung T auf den Geflügelkörper zu und von diesem weg bewegbar ist, und die Rotationsachse K parallel zur Transportrichtung T und in einem Winkel α zur Transportebene E ausgerichtet, derart, dass das Stechmesser mit einer vertikalen Komponente zur Transportebene E nach oben oder unten bewegbar ist. Durch das Drehen bzw. Schwenken um die Rotationsachse Z sind die Stechmesser schnell und sicher aus einer Warteposition, in der die Schneidmesser außer Eingriff mit dem Geflügelkörper liegen, in eine Trennposition innerhalb des Geflügelkörpers und zurück bewegbar. Durch Drehen bzw. Schwenken um die Rotationsachse K kann die schräg nach unten gerichtete Kippbewegung des Stechmessers schnell und sicher ausgeführt werden.

Eine weitere bevorzugte Ausführungsform der Erfindung ist dadurch gekennzeichnet, dass die Neigung des Trägerelementes gegenüber dem Schwenkhebel zur Veränderung des Winkels α einstellbar ist. Damit ist eine Anpassung der Stechmesserposition an unterschiedliche Geometrien und/oder Größen der Geflügelkörper gewährleistet. Mit anderen Worten ist für jede Geometrie und/oder Größe eine ideale Schnittposition des Stechmessers einstellbar.

Zweckmäßigerweise weisen die Stechmesser etwa dreieckförmige Schneidklingen auf und sind fest aber lösbar derart am Trägerelement befestigt, dass die scharfe Schneidkante der Schneidklinge auf der dem Rabenbein abgewandten Seite ausgebildet ist und in Richtung des Schlüsselbeins weist. Zum einen stellt die Form der Schneidklinge sicher, dass das Stechmesser exakt in die durch das Rabenbein und das Schlüsselbein gebildete Senke eingestochen werden kann. Zum anderen unterstützen diese Form der Schneidklinge und die Ausrichtung der Schneidkante den ziehenden Schnitt zum sauberen und sicheren Trennen der Sehne bzw. des Sehnenabschnittes.

Als besonders vorteilhaft hat sich erwiesen, dass den Stechmessern mindestens zwei Servomotoren zugeordnet sind, mittels der die Stechmesser aus einer Warteposition in eine Schneidposition und umgekehrt sowie zur Ausübung der Schnittbewegungen bewegbar sind. Die Servomotoren eignen sich besonders gut, um schnelle und überschwingfreie Bewegungen auszuführen. Insbesondere können die Servomotoren in Bewegung gehalten und erst unmittelbar vor dem Eingriff, also dem Trennvorgang, mit den exakten Daten des zu bearbeitenden Geflügelkörpers versehen werden, wodurch die Präzision der Trennschnitte weiter verbessert wird.

Eine vorteilhafte Gestaltung besteht darin, dass die beiden Schwenkhebel an einem gemeinsamen Träger schwenkbar angeordnet sind. Diese Verbindung schafft zum einen Stabilität in der Vorrichtung. Zum anderen lassen sich die Schnittbewegungen durch diese Maßnahme besonders gut synchronisieren.

Vorteilhafterweise ist der Träger um eine Rotationsachse S, die parallel zur Transporebene und quer zur Transportrichtung T verläuft, schwenkbar ausgebildet, wobei die Schwenkbewegung um die Rotationsachse S und die Schwenkbewegungen um die Rotationsachsen Z und K überlagerbar sind. Mit dieser Ausführungsform wird eine dritte Bewegung der Stechmesser ermöglicht. Diese dritte Bewegung gewährleistet das "Mitlaufen" der Stechmesser mit dem Geflügelkörper, der ja üblicherweise kontinuierlich durch die Bearbeitungsvorrichtung transportiert wird. Anders ausgedrückt ermöglicht das Drehen bzw. Schwenken um die Rotationsachse S, dass sich die gesamte Einheit aus Verbindungsträger, den beiden Schwenkhebeln sowie den beiden an den Schwenkhebeln angeordneten Trägerelementen mit den Stechmessern mit einer horizontalen Komponente in Transportrichtung T mitbewegt, um den Stechmessern mehr Zeit zum Ausführen der Trennschnitte zur Verfügung zu stellen. Die sich durch die Rotation um die Rotationsachse S ergebenden Höhenveränderungen der Stechmesser bezogen auf die Transportebene E aufgrund der Bewegung auf einem Kreisbogen können durch die anderen Schnittbewegungen kompensiert werden, indem diese überlagert werden.

Eine bevorzugte Weiterbildung sieht vor, dass die beiden Stechmesser über ein Synchronisationsgestänge miteinander in Wirkverbindung stehen. Dadurch wird sichergestellt, dass die zu beiden Seiten des Geflügelköpers liegenden, an den Innenbrustfilets befindlichen Sehnen bzw. Sehnenabschnitte gleichzeitig abgetrennt werden, was die Effizienz und das Leistungsvermögen der Vorrichtung erhöht.

Besonders bevorzugt ist eine Ausführungsform, die sich dadurch auszeichnet, dass den beiden Schwenkhebeln jeweils eine Synchronisationsstange zugeordnet ist, die durch einen Servomotor synchron betätigbar sind, und dass den beiden Trägerelementen jeweils eine Synchronisationsstange zugeordnet ist, die durch einen Servomotor synchron betätigbar sind. Damit ist eine optimale Abstimmung der beiden Schnittbewegungen untereinander gewährleistet, was die Schnittqualität erhöht.

Die Aufgabe wird auch durch eine eingangs genannte Bearbeitungsvorrichtung dadurch gelöst, dass die genannte Sehnen-Trennvorrichtung nach einem der Ansprüche 1 bis 10 gebildet ist. Die sich daraus ergebenden Vorteile wurden im Zusammenhang mit der Sehnen-Trennvorrichtung ausführlich beschrieben, weshalb auf die entsprechenden Ausführungen verwiesen wird.

Die Aufgabe wird auch durch ein Verfahren mit den eingangs genannten Schritten dadurch gelöst, dass der Geflügelkörper mit den Schultergelenken voraus in Transportrichtung T entlang einer die Transportebene E definierenden Transportstrecke transportiert wird, wobei das nach unten weisende Brustbein in Längsrichtung der Transportrichtung T und parallel zu dieser ausgerichtet ist, Stechmesser zu beiden Seiten in den Geflügelkörper oberhalb der Sehnen und/oder Sehnenabschnitte eingestochen werden, und mindestens zwei Schnittbewegungen unterschiedlicher Bewegungsrichtungen mit jedem der Stechmesser ausgeführt werden, wobei die beiden Schnittbewegungen einander überlagert sind. Die sich daraus ergebenden Vorteile wurden bereits im Zusammenhang mit der Sehnen-Trennvorrichtung sowie der Bearbeitungsvorrichtung erläutert, weshalb zur Vermeidung von Wiederholungen auf die entsprechenden Passagen verwiesen wird.

Vorteilhafterweise werden individuelle Merkmale der Geflügelkörper erfasst und zur Steuerung der Stechmesser eingesetzt. Damit kann der optimale Einstechpunkt für jeden Geflügelkörper ermittelt werden, so dass die Stechmesser am Außenbrustfilet vorbei im Bereich des Schultergelenkes direkt in die durch das Rabenbein und Schlüsselbein gebildete Senke unter die zu trennende Sehne eindringen können.

Vorzugsweise werden die Stechmesser jeweils um mindestens zwei Rotationsachsen Z und K zur Ausübung der Einführ- und Schnittbewegungen bewegt, wodurch eine ideale Schnittführung schnell und zuverlässig sichergestellt ist.

Ein besonders bevorzugter Schritt zeichnet sich dadurch aus, dass die Stechmesser jeweils seitlich bis an das Rabenbein in den Geflügelkörper eingestochen werden, so dass die Stechmesser mit ihrer stumpfen Führungskante am Rabenbein anliegen, um dann mit ihrer dem Schlüsselbein zugewandten scharfen Schneidkante mit bezogen auf die Transportebene E schräg nach unten und nach außen gerichteten, überlagerten Schnittbewegungen am Gabelbein entlang aus dem Geflügelkörper heraus bewegt zu werden. Damit wird ein sehr präziser Trennschnitt erreicht. Insbesondere kann dadurch die Feinpositionierung der Stechmesser an der Karkasse selbst erfolgen, was die Präzision des Trennschnittes weiter erhöht.

Zweckmäßigerweise werden die Stechmesser während der Ausführung der Schnittbewegungen mit dem Geflügelkörper in Transportrichtung T mindestens teilsweise mitgeführt. Dadurch kann das Trennen der Sehnen auch bei hohen Fördergeschwindigkeiten der Geflügelkörper ausgeführt werden.

Weitere zweckmäßige und/oder vorteilhafte Merkmale und Weiterbildungen ergeben sich aus den Unteransprüchen und der Beschreibung. Eine besonders bevorzugte Ausführungsform sowie das Verfahrensprinzip werden anhand der beigefügten Zeichnung näher erläutert. In der Zeichnung zeigt:
- Fig. 1: eine schematische Darstellung einer Sehnen-Trennvorrichtung,
- Fig. 2: die Sehnen-Trennvorrichtung gemäß Figur 1 in Vorderansicht entsprechend Ansicht II der Figur 1,
- Fig. 3: eine schematische Darstellung einer Bearbeitungsvorrichtung mit einer Sehnen-Trennvorrichtung gemäß der Figuren 1 und 2, wobei in der Bearbeitungsvorrichtung schematisch eine Haltevorrichtung mit aufgesattelter Karkasse gezeigt ist, wobei die Karkasse der besseren Übersicht halber ohne die in dieser Position noch an der Karkasse befindlichen Brustfilets dargestellt ist,

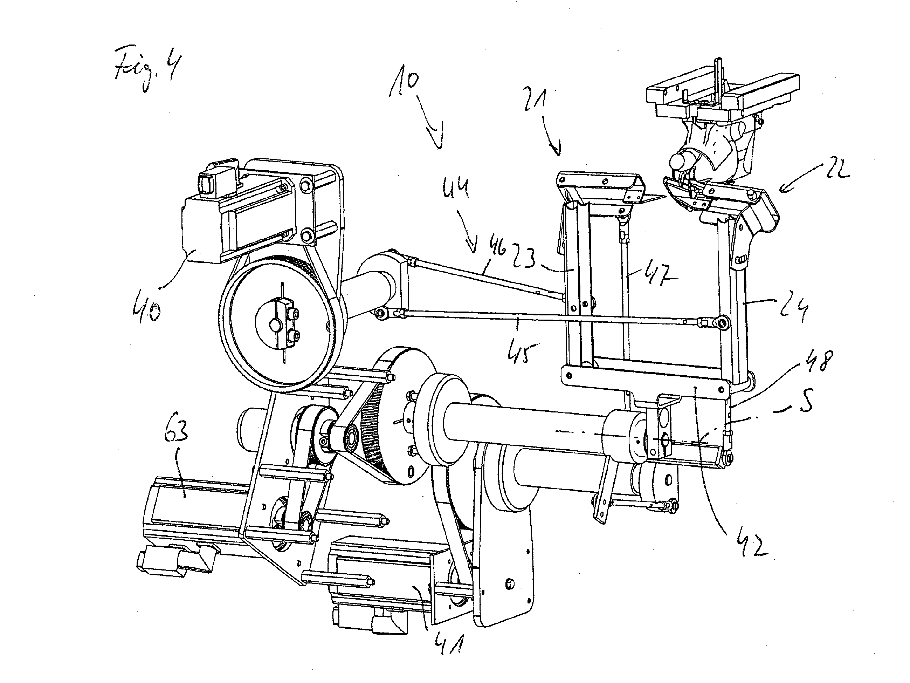

- Fig. 4: eine perspektivische Darstellung der Sehnen-Trennvorrichtung mit Antriebselementen,
- Fig. 5: eine schematische Darstellung der Stechmesser im Eingriff mit der Karkasse,
- Fig. 6a+b: weitere Ausführungsformen der Stechmesser, und

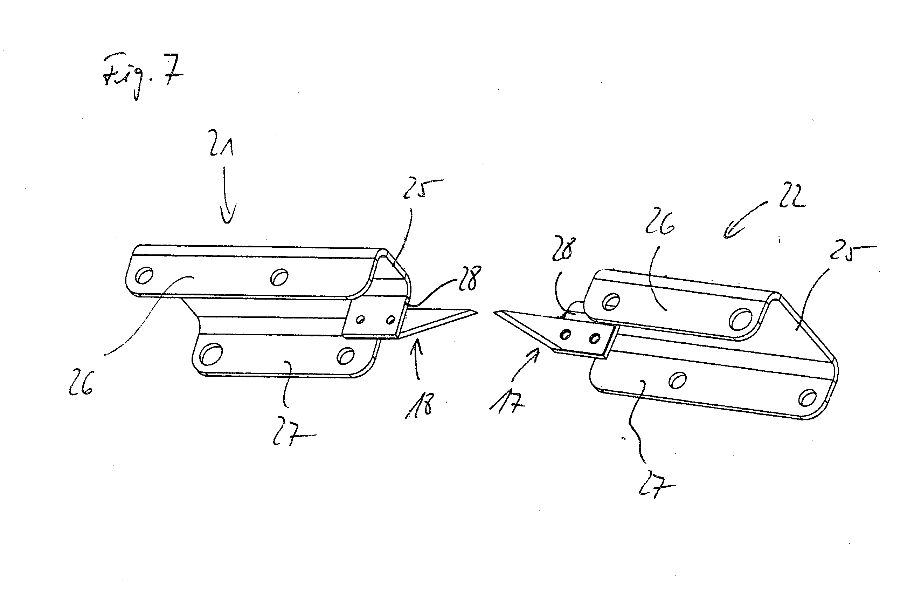

- Fig. 7: eine schematische Darstellung der Trägerelemente mit Stechmessern.

Die Erfindung befasst sich mit einer Sehnen-Trennvorrichtung zum automatischen Abtrennen von an Innenbrustfilets befindlichen Sehnen und/oder Sehnenabschnitten bei entweideten und vollständig von Flügeln befreiten Geflügelkörpern, insbesondere bei der Filetierung von Brustkappen eines Huhns. Selbstverständlich ist die Sehnen-Trennvorrichtung auch zum Filetieren von Brustkappen/Vorderhälften anderer Geflügelkörper ausgebildet und eingerichtet. Diese Sehnen-Trennvorrichtung kann als Einzeleinheit, beispielsweise als Nachrüstsatz oder Austauschteil in bestehenden Bearbeitungsvorrichtungen vorgesehen sein. Die Erfindung befasst sich jedoch auch mit einer solchen Sehnen-Trennvorrichtung als Bestandteil einer Bearbeitungsvorrichtung, bei der in einer Bearbeitungslinie mehrere Bearbeitungsstationen, von denen eine die Sehnen-Trennvorrichtung sein kann, vorgesehen sind.

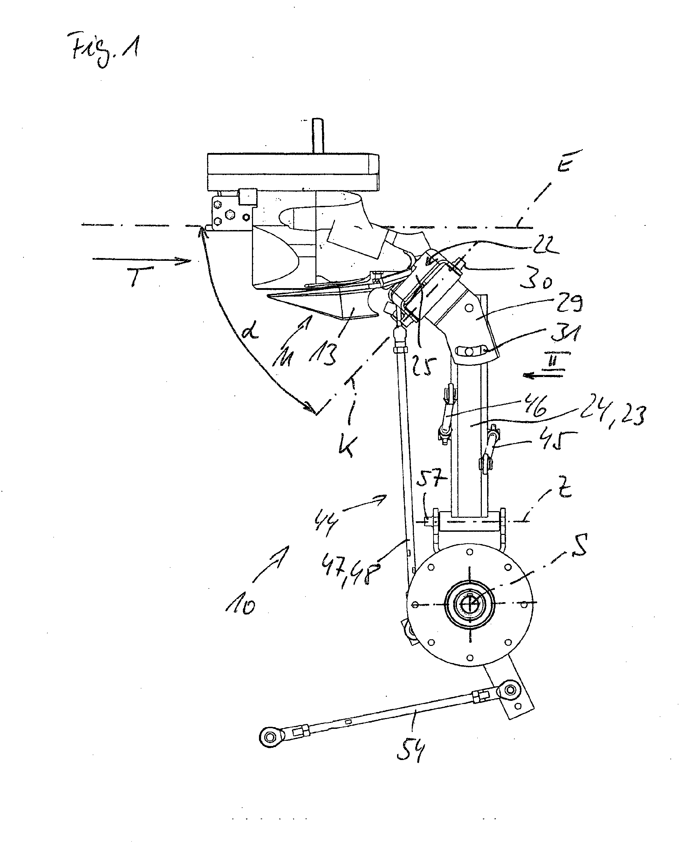

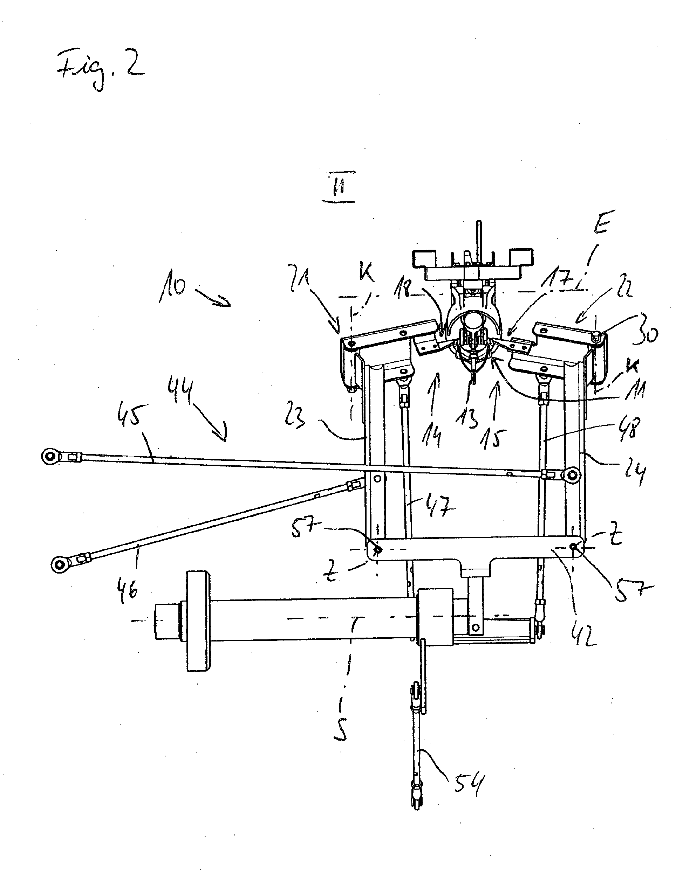

Die in den Figuren 1 und 2 dargestellte Sehnen-Trennvorrichtung 10 zum automatischen Abtrennen von an Innenbrustfilets befindlichen Sehnen und/oder Sehnenabschnitten bei entweideten und vollständig von Flügeln befreiten Geflügelkörpern, bei denen sowohl das direkt an der Karkasse 11 liegende Brustfilet als auch das das Innenbrustfilet abdeckende Außenbrustfilet in ihrer natürlichen Position liegen, und die mit den Schultergelenken 12 voraus in Transportrichtung T entlang einer die Transportebene E definierende Transportstrecke transportiert werden, wobei das nach unten weisende Brustbein 13 in Längsrichtung der Transportrichtung T und parallel zu dieser ausgerichtet ist, umfasst ein Paar Trennmittel 14, 15 zum Trennen der Sehnen und/oder Sehnenabschnitte vom Innenbrustfilet. Die beiden Trennmittel 14, 15 liegen auf einander gegenüberliegenden Seiten der Transportstrecke.

Eine solche Sehnen-Trennvorrichtung 10, die üblicherweise an einem Rahmen, einem Gestell oder einem Gehäuse einer Bearbeitungsvorrichtung 16, die weiter unten beschrieben wird, befestigt ist, zeichnet sich erfindungsgemäß dadurch aus, dass die Trennmittel 14, 15 als Stechmesser 17, 18 ausgebildet sind, wobei jedes Stechmesser 17, 18 zur Ausübung mindestens zweier Schnittbewegungen unterschiedlicher Bewegungsrichtungen ausgebildet und eingerichtet ist und die beiden Schnittbewegungen überlagerbar sind. Das bedeutet, dass durch die Möglichkeit der Überlagerung der Schnittbewegungen eine individuelle Schnittführung gewährleistet ist, indem jedes Stechmesser 17, 18 mindestens zwei unabhängige Bewegungsachsen aufweist. Als Stechmesser 17, 18 sind alle Trennwerkzeuge zu verstehen, die zum einen ein punktuelles bzw. gezieltes Eindringen in den Geflügelkörper gewährleisten und zum anderen mindestens eine Schneidkante 19, 20 aufweisen, mittels der ein Trennschnitt ausführbar ist.

Die im Folgenden beschriebenen Merkmale und Weiterbildungen stellen jeweils für sich betrachtet oder in Kombination miteinander bevorzugte Ausführungsformen der Erfindung dar.

In einer bevorzugten Ausführungsform ist jedes Stechmesser 17, 18 an einem um eine Rotationsachse K schwenkbaren Trägerelement 21, 22 angeordnet, das wiederum an einem um eine Rotationsachse Z schwenkbaren Schwenkhebel 23, 24 befestigt ist. In der dargestellten Ausführungsform ist das Trägerelement 21, 22 ein U-förmiges Profil mit einer Deckplatte 25 und Seitenwänden 26, 27. An der Deckplatte 25 ist eine Haltelasche 28 für das Stechmesser 17, 18 ausgebildet. Die Haltelasche 28 steht bevorzugt senkrecht zur Deckplatte 25, kann aber auch in einem abweichenden Winkel schräg zur Deckplatte 25 ausgerichtet sein. An der Haltelasche 28 sind die Stechmesser 17, 18 befestigt. Das Trägerelement 21, 22 kann einstückig oder mehrteilig ausgebildet sein. Selbstverständlich kann das Trägerelement 21, 22 auch auf andere Weise z.B. als Rahmenkonstruktion, Hebelelement, Flanschlösung oder dergleichen ausgebildet sein.

Das Trägerelement 21, 22 ist schwenkbar an einem Flanschelement 29 angeordnet. Das Flanschelement 29 umfasst einen Achsbolzen 30, auf dem das Trägerelement 21, 22 mit seinen Seitenwänden 26, 27 drehbar um die Rotationsachse K gelagert ist. Andere Lösungen zur Schwenkbarkeit des Trägerelementes 21, 22 um die Rotationsachse K, wie z.B. eine Wellenkonstruktionen, eine Scharnierlösung oder dergleichen, sind aber ebenfalls einsetzbar. Über das Flanschelement 29 ist das Trägerelement 21, 22 fest aber lösbar an dem Schwenkhebel 23, 24 befestigt. Die Schwenkhebel 23, 24 sind in der gezeigten Ausführungsform einfache Profile. An einem freien Ende der Schwenkhebel 23, 24 sind die Trägerelemente 21, 22 befestigt. An dem entgegen gesetzten Ende sind die Schwenkhebel 23, 24 drehbar um die Rotationsachse Z gelagert. Dazu kann z.B. an dem Schwenkhebel 23, 24 ein Achsbolzen 57 angeordnet sein, der in einem Träger 42 gelagert ist. Andere Lösungen zur Schwenkbarkeit des Schwenkhebels 23, 24 um die Rotationsachse Z, wie z.B. eine Wellenkonstruktionen, eine Scharnierlösungen oder dergleichen, sind aber ebenfalls einsetzbar.

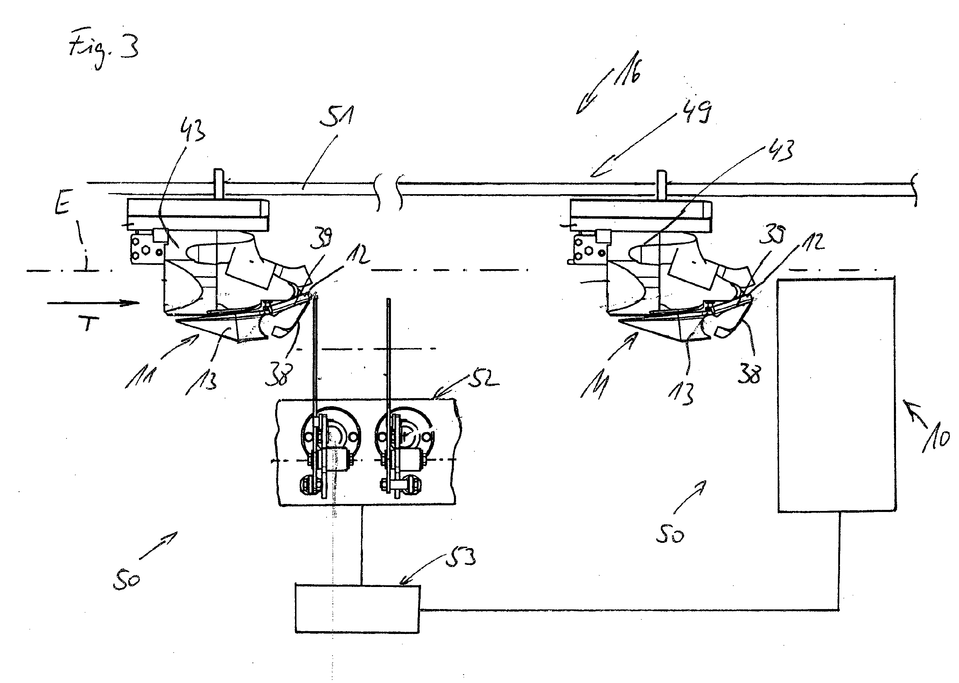

Die Rotationsachse Z ist bevorzugt parallel zur Transportebene E und in Richtung der Transportrichtung T ausgerichtet, derart, dass das Stechmesser 17, 18 quer zur Transportrichtung T auf den Geflügelkörper zu und von diesem weg bewegbar ist. Der Begriff Transportebene ist im vorliegenden Fall keine zweidimensionale Ebene im streng mathematischen Sinn. Da die Geflügelkörper eine gewisse Dicke aufweisen, ist der Begriff lediglich dahingehend zu verstehen, dass die Geflügelkörper parallel zu einem Förderer der Bearbeitungsvorrichtung 16 in horizontaler Richtung transportiert werden (siehe z.B. Figur 1 oder 3). Die Bewegung der Stechmesser 17, 18 quer zur Transportrichtung T beinhaltet neben einem senkrecht zur Transportrichtung T auf den Geflügelkörper treffenden Stechmesser 17, 18 ausdrücklich auch ein Auftreffen der Stechmesser 17, 18 auf den Geflügelkörper in einem Winkel ungleich 90°, also in einem spitzen Winkel. Durch die beschriebene Ausrichtung der Rotationsachse Z ist das seitliche Einstechen der Stechmesser 17, 18 in den Geflügelkörper und das Herausziehen aus diesem realisierbar. Anders ausgedrückt ermöglicht das Drehen bzw. Schwenken um die Rotationsachse Z die Zustellbewegung der Stechmesser 17, 18 aus einer Warteposition, in der die Stechmesser 17, 18 ein kollisionsfreies Transportieren der Geflügelkörper durch die Sehnen-Trennvorrichtung 10 ermöglichen, in eine Trennposition, in der sich die Stechmesser 17, 18 innerhalb des Geflügelkörpers zur Ausführung des Trennschnittes befinden, und zurück. In anderen Ausführungsformen kann die Rotationsachse Z auch in einem spitzen Winkel zur Transportebene E und/oder zur Transportrichtung T geneigt sein.

Die Rotationsachse K ist bevorzugt parallel zur Transportrichtung T und in einem Winkel α zur Transportebene E ausgerichtet, derart, dass das Stechmesser 17, 18 mit einer vertikalen Komponente zur Transportebene E nach oben oder unten bewegbar ist. Diese Kipp- oder Nickbewegung des Stechmessers 17, 18 unter dem Winkel α ermöglicht den Stechmessern 17, 18 eine Schnittbewegung mit einer horizontalen und einer vertikalen Komponente. Das bedeutet, dass daraus eine die Transportebene E schneidende Schnittlinie resultiert, die das Trennen der Sehnen bzw. Sehnenabschnitte vom Innenbrustfilet sicherstellt. Der Winkel α ist größer 0° und kleiner 90° und bevorzugt zwischen 30° und 50°. Besonders bevorzugt ist ein Winkel α zwischen 35° und 45°. In weiteren Ausführungsformen kann die Rotationsachse K auch in einem spitzen Winkel zur Transportrichtung T geneigt sein.

Durch die Überlagerung der Zustell- bzw. Herausziehbewegung der Stechmesser 17, 18 um die Rotationsachse Z einerseits und die Kipp- bzw. Nickbewegung der Stechmesser 17, 18 um die Rotationsachse K andererseits wird der ziehende Trennschnitt erreicht, mit dem die Sehnen bzw. Sehnenabschnitte von den Innenbrustfilets abgetrennt werden, während sich die Innenbrustfilets noch in ihrer ursprünglichen, natürlichen Position an der Karkasse 11 befinden.

Optional ist die Neigung des Trägerelementes 21, 22 gegenüber dem Schwenkhebel 23, 24 zur Veränderung des Winkels α einstellbar. Dazu kann z.B. das Flanschelement 29 ein entsprechend geformtes Langloch 31 aufweisen. Dieses bogenförmig gekrümmte Langloch 31 bildet gleichzeitig einen Anschlag für die Einstellbewegung. Alternativ oder kumulativ könnte auch die Haltelasche 28 an den Trägerelementen 21, 22 in ihrer Ausrichtung zur Deckplatte 25, beispielsweise durch mehrere Raststellungen, verstellbar sein, um die Position der Stechmesser 17, 18 zum Geflügelkörper anpassen zu können.

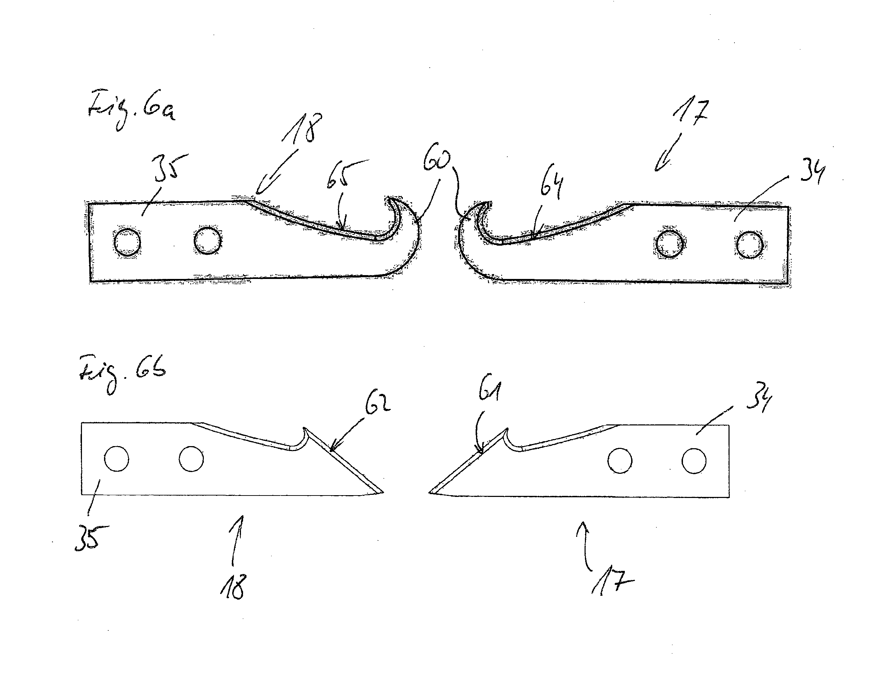

In der beschriebenen Ausführungsform weisen die Stechmesser 17, 18 Schneidklingen 32, 33 auf, die bevorzugt etwa dreieckformig ausgebildet sind. Des Weiteren umfassen die Stechmesser 17, 18 einen Befestigungskörper 34, 35, der bevorzugt einstückig mit den Schneidklingen 32, 33 ausgebildet ist. Mit dem Befestigungskörper 34, 35 sind die Stechmesser 17, 18 fest aber lösbar an den Haltelaschen 28 befestigt. Die Schneidklingen 32, 33 weisen an einer Seite ihre scharfen Schneidkanten 19, 20 auf. Auf der den Schneidkanten 19, 20 abgewandten Seite sind Führungskanten 36, 37 stumpf ausgebildet. Die scharfen Schneidkanten 19, 20 der Schneidklingen 32, 33 weisen in Richtung der Schlüsselbeine 38 der Karkasse 11. Entsprechend weisen die stumpfen Führungskanten 36, 37 der Schneidklingen 32, 33 in Richtung der Rabenbeine 39 der Karkasse 11. Die Stechmesser 17, 18 können jedoch auch in anderer Weise ausgebildet sein. Die Figuren 6 a+b zeigen weitere bevorzugte Ausgestaltungen der Stechmesser 17, 18. Die Stechmesser 17, 18 gemäß der Figur 6a weisen einen abgerundeten "Fädelbereich" 60 auf. Anders ausgedrückt ist die zuerst in den Geflügelkörper dringende Spitze der Stechmesser 17,18 stumpf ausgebildet. Dadurch wird das Brustfilet beim Einstechen in den Geflügelkörper geschont. Die Schneidklingen 64, 65 der Stechmesser 17, 18 sind vorzugsweise leicht gekrümmt ausgebildet. Die Schneidklingen 61, 62 der in Figur 6b dargestellten Stechmesser 17, 18 sind hakenförmig ausgebildet, wobei in dieser Ausführungsform auch die zuerst in den Geflügelkörper dingende Spitze scharfkantig ausgebildet ist.

Die Betätigung der Stechmesser 17, 18, also die Ausübung der Schwenkbewegungen um die Rotationsachsen Z und K, erfolgt bevorzugt über Servomotoren 40, 41. Den Stechmessern 17, 18 sind mindestens zwei Servomotoren 40, 41 zugeordnet, mittels der die Stechmesser 17, 18 aus einer Warteposition in eine Schneid- oder Trennposition und umgekehrt sowie zur Ausübung der Schnittbewegungen bewegbar sind. Anstelle der Servomotoren 40, 41 können auch andere geeignete Antriebsmittel eingesetzt werden. Jedes Stechmesser 17, 18 kann individuell angesteuert werden. Bevorzugt sind die beiden Schwenkhebel 23, 24 an einem gemeinsamen Träger 42 schwenkbar angeordnet. Der Träger 42 ist bevorzugt um eine Rotationsachse S, die parallel zur Transportebene E und quer zur Transportrichtung T verläuft, beispielsweise mittels eines Servomotors 63 schwenkbar ausgebildet. Mit anderen Worten sind die Schwenkhebel 23, 24 und damit die Trägerelemente 21, 22 mit den Stechmessern 17, 18 mindestens mit einer Bewegungskomponente in Transportrichtung T und zurück bewegbar, so dass sich die Stechmesser 17, 18 zumindest temporär mit der den Geflügelkörper tragenden Haltevorrichtung 43 mitbewegen können. Diese Schwenkbewegung um die Rotationsachse S, die quasi ein begrenztes "Mitlaufen" der Stechmesser 17, 18 ermöglicht, ist zu den Schwenkbewegungen um die Rotationsachsen Z und K überlagerbar, so dass eine "flüssige" bzw. kontinuierliche Trennbewegung der Stechmesser 17, 18 erreicht wird. Alternativ kann die Mitlaufbewegung auch linear z.B. mittels eines Schlittens oder dergleichen erfolgen.

Wie weiter oben erwähnt, können die Stechmesser 17, 18 einzeln und individuell angesteuert werden. Optional können die Stechmesser aber auch miteinander synchronisiert sein. Eine Möglichkeit besteht in der elektronischen Synchronisation. In der gezeigten Ausführungsform stehen die Stechmesser 17, 18 über ein Synchronisationsgestänge 44 mechanisch miteinander in Wirkverbindung. Dadurch sind die Schnittbewegungen der Stechmesser 17, 18 gleichzeitig ausführbar. Beiden Schwenkhebeln 23, 24 ist jeweils eine Synchronisationsstange 45, 46 zugeordnet, die durch den Servomotor 40 synchron betätigbar sind. Den beiden Trägerelementen 21, 22 ist ebenfalls jeweils eine Synchronisationsstange 47, 48 zugeordnet, die durch den Servomotor 41 synchron betätigbar sind. Selbstverständlich kann die Synchronisation auch auf andere Weise realisiert sein. Optional ist auch für die Rotation um die Rotationsachse S eine Betätigungsstange 54 vorgesehen, die ebenfalls an einen Servomotor oder ein anderes Betätigungsmittel angeschlossen sein kann.

Wie erwähnt, betrifft die Erfindung des Weiteren eine Bearbeitungsvorrichtung 16. In der Figur 3 ist eine solche Bearbeitungsvorrichtung 16 zum Entfernen des Fleisches von entweideten und vollständig von Flügeln befreiten Geflügelkörpern lediglich schematisch dargestellt, die in einer Bearbeitungslinie 49 angeordnete Bearbeitungsstationen 50 umfasst. Des Weiteren umfasst die Bearbeitungsvorrichtung 16 einen angetriebenen Förderer 51 mit längs der Bearbeitungslinie 49 in Reihe angeordneten Haltevorrichtungen 43 zum Transport von auf den Haltevorrichtungen 43 gestützten Geflügelkörpern und Vorbeiführen derselben an den Bearbeitungsstationen 50. Weiterhin sind wenigstens eine Messsignale abgebende Messvorrichtung 52 zum Erfassen individueller Merkmale der Geflügelkörper während ihrer Förderung sowie eine die Messsignale empfangene Steuereinrichtung 53 zum Steuern des Betriebs der Bearbeitungsstationen 50 Bestandteil der Bearbeitungsvorrichtung 16. Eine der Bearbeitungsstationen 50 ist eine Sehnen-Trennvorrichtung 10, wie sie gemäß der Erfindung weiter oben ausführlich beschrieben wurde.

Im Folgenden wird das Verfahrensprinzip der Bearbeitungsvorrichtung 16 einschließlich der in die Bearbeitungsvorrichtung 16 eingebundenen, erfindungsgemäßen Sehnen-Trennvorrichtung 10 anhand der Figuren näher erläutert. Der Kern des erfindungsgemäßen Verfahrens zum automatischen Abtrennen von an Innenbrustfilets befindlichen Sehnen und/oder Sehnenabschnitten bei entweideten und vollständig von Flügeln befreiten Geflügelkörpern, bei denen sowohl das direkt an der Karkasse liegende Innenbrustfilet als auch das das Innenbrustfilet abdeckende Außenbrustfilet in ihrer natürlichen Position liegen, besteht darin, dass der Geflügelkörper mit den Schultergelenken voraus in Transportrichtung T entlang einer die Transportebene E definierenden Transportstrecke transportiert wird, wobei das nach unten weisende Brustbein in Längsrichtung der Transportrichtung T und parallel zu dieser ausgerichtet ist, dann Stechmesser zu beiden Seiten in den Geflügelkörper unterhalb der Sehnen und/oder Sehnenabschnitte eingestochen werden, und anschließend mindestens zwei Schnittbewegungen unterschiedlicher Bewegungsrichtungen mit jedem der Stechmesser ausgeführt werden, wobei die beiden Schnittbewegungen einander überlagert sind. Dieses Verfahren wird maschinell und automatisch vorzugsweise mit einer Sehnen-Trennvorrichtung 10 ausgeführt, wie sie weiter oben beschrieben ist. Dieses zuvor beschriebene Verfahren ist weiterhin bevorzugt in einen Linienprozess einer Bearbeitungsvorrichtung 16 eingebettet, mit folgender Funktionsweise.

Ein auf die Haltevorrichtung 43 aufgesattelter Geflügelkörper (Karkasse mit Brustfilets) wird mittels des Förderers 51 entlang der Transportstrecke in der Transportebene E in Transportrichtung T an mehreren Bearbeitungsstationen 50 vorbei transportiert (siehe z.B. Figur 3). In der genannten Figur sind die Brustfilets der besseren Übersicht halber insbesondere in Bezug auf die Karkasse weggelassen worden. Selbstverständlich befinden sich die Brustfilets, also die Innenbrustfilets und die Außenbrustfilets, sowohl im Bereich der Messvorrichtung 52 als auch im Bereich der Sehnen-Trennvorrichtung 10, noch in ihrer ursprünglichen, natürlichen Position an der Karkasse. Jeder Geflügelkörper erreicht die Messvorrichtung 52 mit den Schultergelenken 12 voraus und dem nach unten gerichteten Brustbein 13, das in Längsrichtung der Transportrichtung T und parallel zu dieser ausgerichtet ist. Mittels der Messvorrichtung 52 werden z.B. individuelle Merkmale zum Geflügelkörper aufgenommen, vorzugsweise durch das Messen der Position der Schultergelenke 12 (siehe insbesondere Figur 3). Die von der Messvorrichtung 52 ermittelten Daten/Informationen werden von der Steuereinrichtung 53 empfangen, verarbeitet und an die nachfolgenden Bearbeitungsstationen 50, im Ausführungsbeispiel z.B. an die Sehnen-Trennvorrichtung 10, zu deren Betrieb weitergeleitet.

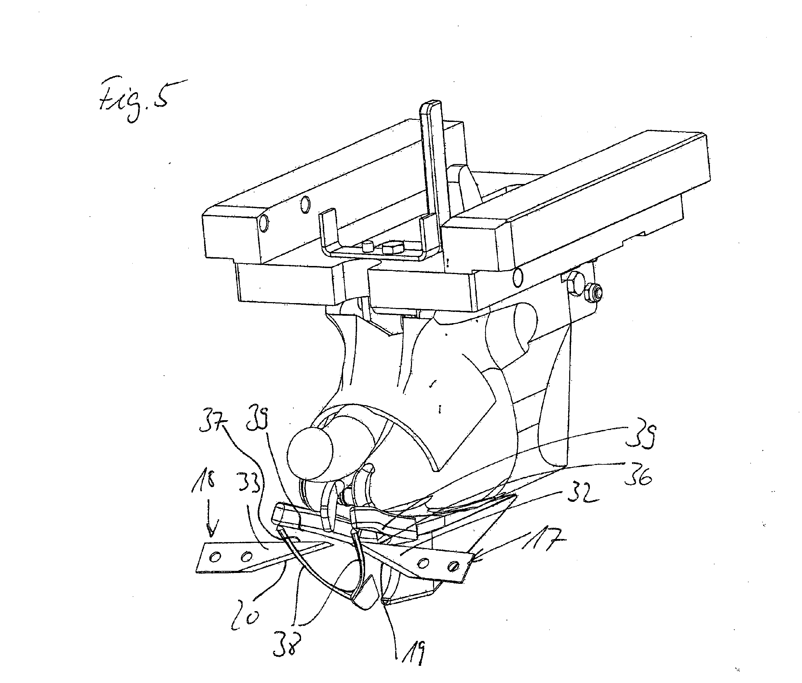

Bei Erreichen der Sehnen-Trennvorrichtung 10 sind die Stechmesser 17, 18 in ihrer Warteposition, so dass der Geflügelkörper mit den vorauslaufenden, das Gabelbein bildenden Schlüsselbeinen 38 zunächst kollisionsfrei in die Sehnen-Trennvorrichtung 10 einlaufen kann. Anhand der vorhandenen Messdaten werden die Stechmesser 17, 18 dann aus der Warteposition in die Schneidposition so gesteuert, dass die Stechmesser 17, 18 zwischen Rabenbein 39 und Schlüsselbein 38 oberhalb der an dem Innenbrustfilet befindlichen Sehne in den Geflügelkörper eingestochen werden, ohne das Außenbrustfilet und das Innenbrustfilet zu verletzen. Dann erfolgt eine aus zwei überlagerten Schnittbewegungen erzeugte Trennschnitt, indem die Stechmesser 17, 18 sowohl schräg nach unten vom Rabenbein 39 in Richtung des Schlüsselbeins 38 als auch vom Geflügelkörper weg nach außen bewegt werden. Die Figur 5 zeigt die Stechmesser 17, 18 in einer solchen Position zwischen Rabenbein 39 und Schlüsselbein 38, wobei die Stechmesser 17, 18 bereits vom Rabenbein 39 weg bewegt sind. Durch den sich dadurch ergebenden ziehenden Schnitt werden zu beiden Seiten des Geflügelkörpers die Sehnen bzw. Sehnenabschnitte, die sich an den Innenbrustfilets befinden, abgetrennt, während sich die Innenbrustfilets noch in ihrer ursprünglichen, natürlichen Position befinden.

Zur Ausübung der Einführ- und Schnittbewegungen bewegen sich die Stechmesser 17, 18 jeweils um mindestens zwei Rotationsachsen Z und K. Durch eine Dreh- bzw. Schwenkbewegung um die Rotationsachse Z werden die Stehmesser 17, 18 jeweils seitlich bis auf das Rabenbein 39 in den Geflügelkörper eingestochen. Dies ist letztlich eine Zustellbewegung der Stechmesser 17, 18 auf den Geflügelkörper zu bzw. in diesen hinein. Die Stechmesser 17, 18 liegen dann vorzugsweise mit ihrer stumpfen Führungskante 36, 37 am Rabenbein 39 an. Nunmehr bewegen sich die Stechmesser 17, 18 durch eine Schwenkbewegung um die Rotationsachse K bezogen auf die Transportebene E schräg nach unten am Gabelbein entlang, während die Stechmesser 17, 18 gleichzeitig um die Rotationsachse Z aus dem Geflügelkörper heraus geschwenkt werden. Aus diesen überlagerten Bewegungen ergibt sich der ziehende Trennschnitt der Sehnen bzw. Sehnenabschnitte.

Optional können die Stechmesser 17, 18 während des gerade beschriebenen Trennschnittes zusätzlich mindestens teilweise mit dem Geflügelkörper in Transportrichtung T mitgeführt werden. Durch ein Schwenken der gesamten Einheit, bestehend aus Schwenkhebeln 23, 24, Trägerelementen 21, 22 sowie den daran angeordneten Stechmessern 17, 18, um die Rotationsachse S kann ein begrenztes "Mitlaufen" der Stechmesser 17, 18 in Transportrichtung T erreicht werden, da die Schwenkbewegung auch eine horizontale Komponente aufweist. Die aus der Schwenkbewegung resultierenden Höhenveränderungen durch die vertikale Komponente können durch die Schwenkbewegungen um die Rotationsachsen Z und K ausgeglichen werden. Das "Mitlaufen" kann auch linear beispielsweise mittels eines Schlittens erfolgen.

## Patentansprüche

1. Sehnen-Trennvorrichtung (10) zum automatischen Abtrennen von an Innenbrustfilets befindlichen Sehnen und/oder Sehnenabschnitten bei entweideten und vollständig von Flügeln befreiten Geflügelkörpern, bei denen sowohl das direkt an der Karkasse (11) liegende Innenbrustfilet als auch das das Innenbrustfilet abdeckende Außenbrustfilet in ihrer natürlichen Position liegen, und die mit den Schultergelenken (12) voraus in Transportrichtung T entlang einer die Transportebene E definierende Transportstrecke transportiert werden, wobei das nach unten weisende Brustbein (13) in Längsrichtung der Transportrichtung T und parallel zu dieser ausgerichtet ist, umfassend ein Paar Trennmittel (14, 15) zum Trennen der Sehnen und/oder Sehnenabschnitte vom Innenbrustfilet, wobei die beiden Trennmittel (14, 15) auf einander gegenüberliegenden Seiten der Transportstrecke der zu bearbeitenden Geflügelkörper liegen, **dadurch gekennzeichnet, dass** die Trennmittel (14, 15) als Stechmesser (17, 18) ausgebildet sind, wobei jedes Stechmesser (17, 18) zur Ausübung mindestens zweier Schnittbewegungen unterschiedlicher Bewegungsrichtungen ausgebildet und eingerichtet ist und die beiden Schnittbewegungen überlagerbar sind.

2. Sehnen-Trennvorrichtung nach Anspruch 1, **dadurch gekennzeichnet, dass** jedes Stechmesser (17, 18) an einem um eine Rotationsachse K schwenkbaren Trägerelement (21, 22) angeordnet ist, das wiederum an einem um eine Rotationsachse Z schwenkbaren Schwenkhebel (23, 24) befestigt ist.

3. Sehnen-Trennvorrichtung nach Anspruch 2, **dadurch gekennzeichnet, dass** die Rotationsachse Z parallel zur Transportebene E und in Richtung der Transportrichtung T ausgerichtet ist, derart, dass das Stechmesser (17, 18) quer zur Transportrichtung T auf den Geflügelkörper zu und von diesem weg bewegbar ist, und die Rotationsachse K parallel zur Transportrichtung T und in einem Winkel α zur Transportebene E ausgerichtet ist, derart, dass das Stechmesser (17, 18) mit einer vertikalen Komponente zur Transportebene E nach oben oder unten bewegbar ist.

4. Sehnen-Trennvorrichtung nach Anspruch 2 oder 3, **dadurch gekennzeichnet, dass** die Neigung des Trägerelementes (21, 22) gegenüber dem Schwenkhebel (23, 24) zur Veränderung des Winkels α einstellbar ist.

5. Sehnen-Trennvorrichtung nach einem der Ansprüche 2 bis 4, **dadurch gekennzeichnet, dass** die Stechmesser (17, 18) etwa dreieckförmige Schneidklingen (32, 33) aufweisen und fest aber lösbar derart am Trägerelement (21, 22) befestigt sind, dass die scharfe Schneidkante (19, 20) der Schneidklinge (32, 33) auf der dem Rabenbein (39) abgewandten Seite ausgebildet ist und in Richtung des Schlüsselbeins (38) weist.

6. Sehnen-Trennvorrichtung nach einem der Ansprüche 1 bis 5, **dadurch gekennzeichnet, dass** den Stechmessern (17, 18) mindestens zwei Servomotoren (40, 41) zugeordnet sind, mittels der die Stechmesser (17, 18) aus einer Warteposition in eine Schneidposition und umgekehrt sowie zur Ausübung der Schnittbewegungen bewegbar sind.

7. Sehnen-Trennvorrichtung nach einem der Ansprüche 2 bis 6, **dadurch gekennzeichnet, dass** die beiden Schwenkhebel (23, 24) an einem gemeinsamen Träger (42) schwenkbar angeordnet sind.

8. Sehnen-Trennvorrichtung nach Anspruch 7, **dadurch gekennzeichnet, dass** der Träger (42) um eine Rotationsachse S, die parallel zur Transportebene E und quer zur Transportrichtung T verläuft, schwenkbar ausgebildet ist, wobei die Schwenkbewegung um die Rotationsachse S und die Schwenkbewegungen um die Rotationsachsen Z und K überlagerbar sind.

9. Sehnen-Trennvorrichtung nach einem der Ansprüche 1 bis 8, **dadurch gekennzeichnet, dass** die beiden Stechmesser (17, 18) über ein Synchronisationsgestänge (44) miteinander in Wirkverbindung stehen.

10. Sehnen-Trennvorrichtung nach Anspruch 9, **dadurch gekennzeichnet, dass** den beiden Schwenkhebeln (23, 24) jeweils eine Synchronisationsstange (45, 46) zugeordnet ist, die durch einen Servomotor (40) synchron betätigbar sind, und dass den beiden Trägerelementen (21, 22) jeweils eine Synchronisationsstange (47, 48) zugeordnet ist, die durch einen Servomotor (41) synchron betätigbar sind.

11. Bearbeitungsvorrichtung (16) zum Entfernen des Fleisches von entweideten und vollständig von Flügeln befreiten Geflügelkörpern, umfassend in einer Bearbeitungslinie (49) angeordnete Bearbeitungsstationen (50), einen angetriebenen Förderer (51) mit längs der Bearbeitungslinie (49) in Reihe angeordneten Haltevorrichtungen (43) zum Transport von auf den Haltevorrichtungen (43) gestützten Geflügelkörpern und Vorbeiführen derselben an den Bearbeitungsstationen (50), wenigstens eine Messsignale abgebende Messvorrichtung (52) zum Erfassen individueller Merkmale der Geflügelkörper während ihrer Förderung sowie eine die Messsignale empfangende Steuereinrichtung (53) zum Steuern des Betriebs der Bearbeitungsstationen (50), sowie eine Sehnen-Trennvorrichtung (10) als Bearbeitungsstation (50) zum automatischen Abtrennen von an Innenbrustfilets befindlichen Sehnen und/oder Sehnenabschnitten, **dadurch gekennzeichnet, dass** die genannte Sehnen-Trennvorrichtung (10) nach einem der Ansprüche 1 bis 10 gebildet ist.

12. Verfahren zum automatischen Abtrennen von an Innenbrustfilets befindlichen Sehnen und/oder Sehnenabschnitten bei entweideten und vollständig von Flügeln befreiten Geflügelkörpern, bei denen sowohl das direkt an der Karkasse (11) liegende Innenbrustfilet als auch das das Innenbrustfilet abdeckende Außenbrustfilet in ihrer natürlichen Position liegen, **gekennzeichnet durch** folgende Schritte:
- Transportieren der Geflügelkörper mit den Schultergelenken (12) voraus in Transportrichtung T entlang einer die Transportebene E definierenden Transportstrecke, wobei das nach unten weisende Brustbein (13) in Längsrichtung der Transportrichtung T und parallel zu dieser ausgerichtet ist,
- Einstechen von Stechmessern (17, 18) zu beiden Seiten in den Geflügelkörper oberhalb der Sehnen und/oder Sehnenabschnitte, und
- Ausführen mindestens zweier Schnittbewegungen unterschiedlicher Bewegungsrichtungen mit jedem der Stechmesser (17, 18), wobei die beiden Schnittbewegungen einander überlagert sind.

13. Verfahren nach Anspruch 12, **dadurch gekennzeichnet, dass** individuelle Merkmale der Geflügelkörper erfasst und zur Steuerung der Stechmesser (17, 18) eingesetzt werden.

14. Verfahren nach Anspruch 12 oder 13, **dadurch gekennzeichnet, dass** die Stechmesser (17, 18) jeweils um mindestens zwei Rotationsachsen Z und K zur Ausübung der Einführ- und Schnittbewegungen bewegt werden.

15. Verfahren nach einem der Ansprüche 12 bis 14, **dadurch gekennzeichnet, dass** die Stechmesser (17, 18) jeweils seitlich bis an das Rabenbein (39) in den Geflügelkörper eingestochen werden, so dass die Stechmesser (17, 18) mit ihrer stumpfen Führungskante (36, 37) am Rabenbein (39) anliegen, um dann mit ihrer dem Schlüsselbein (38) zugewandten scharfen Schneidkante (19, 20) mit bezogen auf die Transportebene E schräg nach unten und nach außen gerichteten, überlagerten Schnittbewegungen am Gabelbein entlang aus dem Geflügelkörper heraus bewegt zu werden.

16. Verfahren nach einem der Ansprüche 12 bis 15, **dadurch gekennzeichnet, dass** die Stechmesser (17, 18) während der Ausführung der Schnittbewegungen mit dem Geflügelkörper in Transportrichtung T mindestens teilsweise mitgeführt werden.

## Claims

1. A sinew separating apparatus (10) for the automatic separation of sinews and/or sinew portions present on inner breast fillets of gutted poultry bodies which have had the wings completely removed, wherein both the inner breast fillet lying directly on the carcass (11) and the outer breast fillet covering the inner breast fillet lie in their natural position, and the poultry bodies are transported, the shoulder joints (12) forward, in transport direction T along a transport route defining the transport plane E, wherein the downwardly directed breast bone (13) is oriented in the longitudinal direction of the transport direction T and parallel to it, comprising a pair of separating means (14, 15) for separating the sinews and/or sinew portions from the inner breast fillet, wherein the two separating means (14, 15) are located on opposite sides of the transport route of poultry bodies to be processed, **characterised in that** the separating means (14, 15) are formed as sticking knives (17, 18), wherein each sticking knife (17, 18) is designed and configured to perform at least two cutting movements in different directions of movement and the two cutting movements are superimposable.

2. The sinew separating apparatus according to claim 1, **characterised in that** each sticking knife (17, 18) is arranged on a carrier element (21, 22) pivotable about an axis of rotation K, said element in turn attached on a pivot lever (23, 24) pivotable about an axis of rotation Z.

3. The sinew separating apparatus according to claim 2, **characterised in that** the axis of rotation Z is oriented parallel to the transport plane E and in the direction of the transport direction T such that the sticking knife (17, 18) is able to be moved transversely to the transport direction T toward and away from the poultry body, and the axis of rotation K is oriented parallel to the transport direction T and at an angle α with respect to the transport plane E such that the sticking knife (17, 18) is able to be moved upward or downward with a vertical component with respect to the transport plane E.

4. The sinew separating apparatus according to claim 2 or 3, **characterised in that** the inclination of the carrier element (21, 22) with respect to the pivot lever (23, 24) can be set for changing the angle α.

5. The sinew separating apparatus according to any one of claims 2 to 4, **characterised in that** the sticking knives (17, 18) have approximately triangular cutting blades (32, 33) and are firmly but removably attached on the carrier element (21, 22), so that the sharp cutting edge (19, 20) of the cutting blade (32, 33) is formed on the side facing away from the coracoid (39) and points in the direction of the clavicle (38).

6. The sinew separating apparatus according to any one of claims 1 to 5, **characterised in that** at least two servo motors (40, 41) are assigned to the sticking knives (17, 18), by means of which the sticking knives (17, 18) are able to be moved out of a waiting position into a cutting position and vice versa and to perform the cutting movements.

7. The sinew separating apparatus according to any one of claims 2 to 6, **characterised in that** the two pivot levers (23, 24) are arranged pivotably on a common carrier (42).

8. The sinew separating apparatus according to claim 7, **characterised in that** the carrier (42) is designed to pivot about an axis of rotation S, which runs parallel to the transport plane E and transverse to the transport direction T, wherein the pivoting movement about the axis of rotation S and the pivoting movements about the axes of rotation Z and K are superimposable.

9. The sinew separating apparatus according to any one of claims 1 to 8, **characterised in that** the two sticking knives (17, 18) are operatively connected to one another via synchronisation rods (44).

10. The sinew separating apparatus according to claim 9, **characterised in that** a synchronisation rod (45, 46) is assigned to each of the two pivot levers (23, 24), said rods being able to be actuated synchronously by a servo motor (40) and a synchronisation rod (47, 48) being assigned to the two carrier elements (21, 22), said rods being able to be actuated synchronously by a servo motor (41).

11. A processing apparatus (16) for removing the meat from gutted poultry bodies which have had the wings completely removed, comprising processing stations (50) arranged in a processing line (49), a driven conveyor (51) with holding apparatuses (43) arranged in a row along the processing line (49) to transport poultry bodies supported by the holding apparatuses (43) and to guide them past the processing stations (50), at least one measuring apparatus (52) emitting measurement signals for recording individual characteristics of the poultry bodies during their conveyance, and a control device (53), which receives the measurement signals, for controlling the operation of the processing stations (50), and a sinew separating apparatus (10) as a processing station (50) for automatic separation of sinews and/or sinew portions present on inner breast fillets, **characterised in that** said sinew separating apparatus (10) is constructed according to any one of claims 1 to 10.

12. A method for the automatic separation of sinews and/or sinew portions present on inner breast fillets of gutted poultry bodies which have had the wings completely removed, in which both the inner breast fillet lying directly on the carcass (11) and the outer breast fillet covering the inner breast fillet lie in their natural position, **characterised by** the following steps:
- transport of the poultry bodies with the shoulder joints (12) forward in a transport direction T along a transport route defining the transport plane E, wherein the downwardly directed breastbone (13) is oriented in the longitudinal direction of the transport direction T and parallel to it;
- insertion of sticking knives (17, 18) into the poultry body on both sides above the sinews and/or sinew portions; and
- performance of at least two cutting movements in different directions of movement with each of the sticking knives (17, 18), wherein the two cutting movements are superimposed on one another.

13. The method according to claim 12, **characterised in that** individual characteristics of the poultry body are recorded and used to control the sticking knives (17, 18).

14. The method according to claim 12 or 13, **characterised in that** to perform the insertion and cutting movements, the sticking knives (17, 18) are each moved about at least two axes of rotation Z and K.

15. The method according to any one of claims 12 to 14, **characterised in that** the sticking knives (17, 18) are each inserted laterally into the poultry body up to the coracoid (39) so that the sticking knives (17, 18) lie on the coracoid (39) with their blunt guiding edge (36, 37), in order to then be moved out of the poultry body along the wishbone with their sharp cutting edge (19, 20) facing the clavicle (38) in superimposed cutting movements directed obliquely downward and outward with respect to the transport plane E.

16. The method according to any one of claims 12 to 15, **characterised in that** the sticking knives (17, 18) are at least partially guided along with the poultry body in the transport direction T during the performance of the cutting movements.

## Revendications

1. Dispositif de séparation de tendons (10) pour séparer automatiquement les tendons et/ou portions de tendon qui se trouvent à l'intérieur du blanc sur des corps de volailles vidées et totalement débarrassées des ailes, corps de volaille sur lesquels l'intérieur du blanc qui repose directement sur la carcasse (11) ainsi que l'extérieur du blanc qui recouvre l'intérieur du blanc se trouvent dans leur position naturelle et qui sont transportés avec les articulations des épaules (12) à l'avant dans le sens du transport T le long d'un trajet de transport définissant le plan de transport E. Le sternum (13) dirigé vers le bas est orienté dans le sens longitudinal du sens du transport T et parallèlement à celui-ci. Le dispositif de séparation de tendons selon l'invention comprend une paire de moyens de séparation (14, 15) pour séparer les tendons et/ou portions de tendon de l'intérieur du blanc, les deux moyens de séparation (14, 15) se trouvant sur des côtés mutuellement opposés du trajet de transport des corps de volailles à traiter, et se **caractérise en ce que** les moyens de séparation (14, 15) sont réalisés sous la forme de couteaux à découper (17, 18). Chaque couteau à découper (17, 18) est configuré et agencé pour effectuer au moins deux mouvements de découpe dans des sens de déplacement différents et les deux mouvements de découpe peuvent se superposer.

2. Dispositif de séparation de tendons selon la revendication 1, **caractérisé en ce que** chaque couteau à découper (17, 18) est disposé sur un élément de support (21, 22) pouvant pivoter autour d'un axe de rotation K. Chaque élément de support (21, 22) est fixé de l'autre côté à un levier pivotant (23, 24) qui pivote autour d'un axe de rotation Z.

3. Dispositif de séparation de tendons selon la revendication 2, **caractérisé en ce que** l'axe de rotation Z est positionné parallèlement au plan de transport E et en direction du sens du transport T, de sorte que le couteau à découper (17, 18) puisse se déplacer en se rapprochant et en s'écartant des corps de volailles transversalement par rapport au sens du transport T et l'axe de rotation K est positionné parallèlement au sens du transport T et dans un angle α par rapport au plan de transport E, de sorte que le couteau à découper (17, 18) puisse de déplacer vers le haut ou vers le bas avec une composante verticale par rapport au plan de transport E.

4. Dispositif de séparation de tendons selon la revendication 2 ou 3, **caractérisé en ce que** l'inclinaison de l'élément de support (21, 22) par rapport au levier pivotant (23, 24) est réglable pour modifier l'angle α.

5. Dispositif de séparation de tendons selon l'une des revendications 2 à 4, **caractérisé en ce que** les couteaux de découpe (17, 18) doivent présenter des lames de découpe (32, 33) à peu près triangulaires et être fixés solidement mais de manière amovible à l'élément de support (21, 22) de sorte que l'arête de coupe aiguisée (19, 20) de la lame de découpe (32, 33) est agencée du côté opposé au coracoïde (39) et placée dans le sens de la clavicule (38).

6. Dispositif de séparation de tendons selon l'une des revendications 1 à 5, **caractérisé en ce que** les couteaux à découper (17, 18) sont associés à au moins deux servomoteurs (40, 41), au moyen desquels les couteaux à découper (17, 18) peuvent se déplacer d'une position d'attente à une position de découpe et inversement ainsi que pour effectuer les mouvements de découpe.

7. Dispositif de séparation de tendons selon l'une des revendications 2 à 6, **caractérisé en ce que** les deux leviers pivotants (23, 24) sont montés sur un support commun (42) de manière à pouvoir pivoter.

8. Dispositif de séparation de tendons selon la revendication 7, **caractérisé en ce que** le support (42) est conçu pour pivoter autour d'un axe de rotation S évoluant parallèlement au plan de transport E et transversalement à la direction du transport T, le mouvement de pivotement autour de l'axe de rotation S et les mouvements de pivotement autour des axes de rotation Z et K étant superposables.

9. Dispositif de séparation de tendons selon l'une des revendications 1 à 8, **caractérisé en ce que** les deux couteaux à découper (17, 18) sont en liaison opérationnelle l'un avec l'autre par une tringlerie de synchronisation (44).

10. Dispositif de séparation de tendons selon la revendication 9, **caractérisé en ce que** les deux leviers pivotants (23, 24) sont chacun associés à une barre de synchronisation (45, 46), actionnées en synchronisme par un servomoteur (40) et que les deux éléments de support (21, 22) sont chacun associés à une barre de synchronisation (47, 48), actionnées en synchronisme par un servomoteur (41).

11. Dispositif de traitement (16) pour retirer la viande sur des corps de volailles vidées et totalement débarrassées des ailes comprenant des postes de traitement (50) disposés sur une ligne de traitement (49), un convoyeur motorisé (51) avec, le long de la ligne de traitement (49), des dispositifs de maintien alignés (43) pour transporter les corps de volailles reposant sur les dispositifs de maintien (43) et faire passer ceux-ci aux postes de traitement (50), au moins un dispositif de mesure (52) déclenchant des signaux de mesure pour détecter les caractéristiques individuelles des corps de volailles pendant leur transport ainsi qu'un moyen de commande (53) recevant les signaux de mesure pour commander le fonctionnement des postes de traitement (50) ainsi qu'un dispositif de séparation de tendons (10) comme poste de traitement (50) pour séparer automatiquement les tendons et/ou portions de tendon qui se trouvent à l'intérieur du blanc, **caractérisé en ce que** ledit dispositif de séparation de tendons (10) est conçu selon l'une des revendications 1 à 10.

12. Procédé de séparation automatique des tendons et/ou portions de tendon qui se trouvent à l'intérieur du blanc sur des corps de volailles vidées et totalement débarrassées des ailes, corps de volaille sur lesquels l'intérieur du blanc qui repose directement sur la carcasse (11) ainsi que l'extérieur du blanc qui recouvre l'intérieur du blanc se trouvent dans leur position naturelle, procédé **caractérisé par** les étapes suivantes :
- le transport des corps de volailles avec les articulations des épaules (12) à l'avant dans le sens du transport T le long d'un trajet de transport définissant le plan de transport E. Le sternum (13) dirigé vers le bas est orienté dans le sens longitudinal du sens du transport T et parallèlement à celui-ci,
- l'insertion de couteaux à découper (17, 18) dans les deux côtés des corps de volailles au-dessus du tendon et/ou de la portion de tendon, et
- l'exécution d'au moins deux mouvements de découpe dans des sens de déplacement différents avec chacun des couteaux à découper (17, 18), les deux mouvements de découpe se superposant l'un l'autre.

13. Procédé selon la revendication 12, **caractérisé en ce que** les caractéristiques individuelles des corps de volailles sont détectées et utilisées pour commander les couteaux à découper (17, 18).

14. Procédé selon la revendication 12 ou 13, **caractérisé en ce que** les couteaux à découper (17, 18) se déplacent chacun autour d'au moins deux axes de rotation Z et K pour exercer des mouvements d'introduction et de découpe.

15. Procédé selon l'une des revendications 12 à 14, **caractérisé en ce que** les couteaux de découpe (17, 18) s'enfoncent chacun latéralement jusqu'au coracoïde (39) dans les corps de volailles de sorte que les couteaux de découpe (17, 18) avec leur arête de guidage émoussée (36, 37) se placent près du coracoïde (39) pour ensuite être extraits du corps de la volaille le long de la clavicule avec leur arête de coupe aiguisée (19, 20) opposée à la clavicule (38) au moyen de mouvements de découpe superposés dirigés vers le bas et l'extérieur en oblique par rapport au plan de transport E .

16. Procédé selon l'une des revendications 12 à 15, **caractérisé en ce que** les couteaux de découpe (17, 18) sont au moins partiellement emportés pendant l'exécution des mouvements de découpe avec le corps de la volaille dans le sens du transport T.
